Europäisches Patentamt

(19) European Patent Office   (11) Publication number: **0 190 882**
Office européen des brevets                              **B1**

(12) **EUROPEAN PATENT SPECIFICATION**

(45) Date of publication of the patent specification:      (51) Int. Cl.⁴: **F 16 K  31/06**
**19.04.89**

(21) Application number: **86300628.4**

(22) Date of filling: **30.01.86**

(54) **Two stage solenoid valve.**

(30) Priority: **01.02.85 US 697599**

(43) Date of publication of application:
**13.08.86 Bulletin 86/33**

(45) Publication of the grant of the patent:
**19.04.89 Bulletin 89/16**

(84) Designated Contracting States:
**CH DE FR GB IT LI NL SE**

(56) References cited:
**EP-A-0 107 445**
**DE-A-2 261 278**
**DE-C-1 161 735**
**US-A-1 882 392**

(73) Proprietor: **HONEYWELL INC., Honeywell Plaza,
Minneapolis Minnesota 55408 (US)**

(72) Inventor: **Fargo, Richard N., 744 Church Street
Apartment 7, Newington Connecticut 06111 (US)**

(74) Representative: **Frohwitter, Bernhard, Dipl.- Ing.,
Bardehle- Pagenberg- Dost- Altenburg & Partner
Patent- und Rechtsanwälte Galileiplatz 1, 8000
München 80 (DE)**

## Description

The present invention is directed to a solenoid operated valve, and specifically to a two-stage solenoid valve for providing two different flow rates therethrough.

Prior attempts to provide two different flow rates have included the use of two valves in parallel flow lines with different size flow control orifices. Another prior art solution to the problem used a single orifice valve with a single coil and armature and a half-wave rectified alternating current (AC) input energizing signal; the energizing signal produced an oscillation of the armature at a fixed frequency to produce a reduced flow rate relative to a non-oscillatory fully opened position of the armature produced by a non-rectified energizing signal. Another prior art approach (EP-A-0 107 445) utilized a first and a second solenoid coil to respectively position a first and a second coaxial armature acting jointly on a single orifice sealing means to position the sealing means at a first and a second spaced position with respect to the orifice. These prior art approaches have inherent disadvantages such as chatter at reduced flow in the case of the oscillating armature, increased cost of the extra valve and plumbing in the case of the dual valve and inability to maintain a precise ratio between the two flow rates in the case of the valve using the dual armatures and single sealing means. Another prior art solution (US patent 1 882 392) used two armatures carrying a main valve proper and a smaller valve proper. The different flow rates provided by this valve depend on the distance between the respective valve proper and its seat, in the opened position. Therefore, a precise selection of flow rates is difficult to achieve, especially as no sealings are used in this valve.

Accordingly, in order to overcome these shortcomings, it is desirable to provide a valve having two flow rates while exhibiting a quiet operation and precise selection of flow rate to maintain a fixed ratio therebetween.

Accordingly the present invention provides a solenoid valve comprising a valve body having a fluid path therethrough and lower and upper coaxial armatures which are elevated respectiveley by a first and a second solenoid coil, the lower armature having a sealing member sealing against a rim of the outlet passage when the armature is not elevated, whereby energizing of the second coil produces a low flow rate and energizing of both coils produces a high flow rate, characterized in that the lower armature has an internal bore communicating between its two end faces and has a plurality of exterior longitudinal grooves communicating with the inlet port, the grooves and the bore allowing a fluid path at the low flow rate, and the upper armature has a respective sealing member which seals against a rim forming the upper end of the bore of the lower armature, when both armatures are in the same position (both elevated or both lowered).

A valve in accordance with the invention will now be described, by way of example, with reference to the drawings, in which:

Figure 1 is a sectional view of the valve; and

Figures 2A, 2B and 2C are simplified sectional views of the valve shown in Figure 1 and illustrate a sequence of operations thereof.

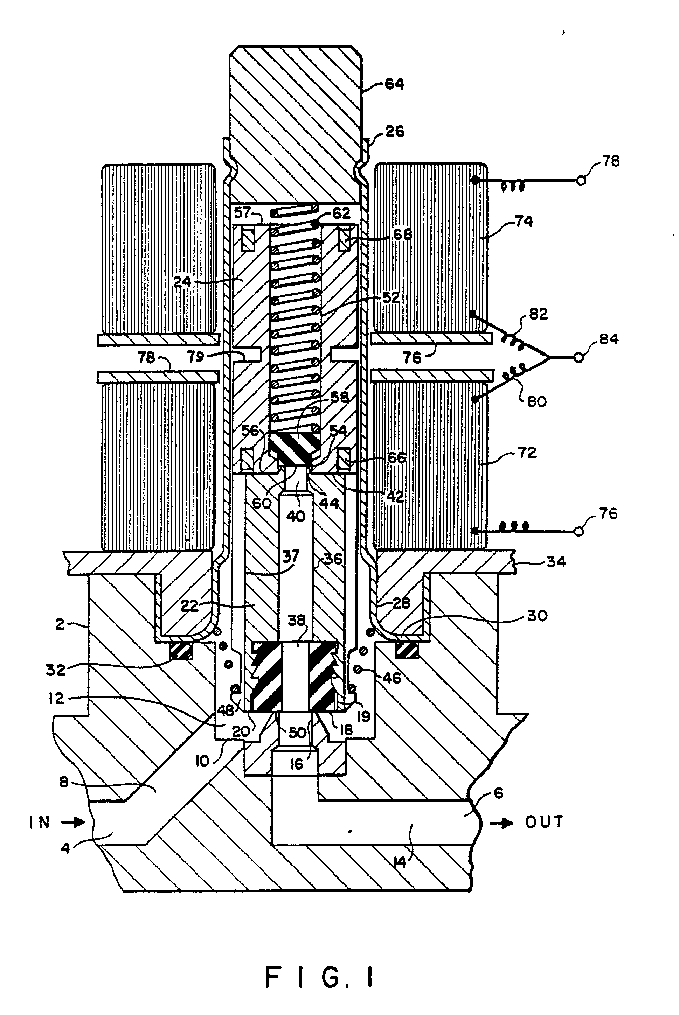

Figure 1 shows a section of the two-stage solenoid valve, having a valve body 2 with a fluid inlet port IN 4 and fluid outlet port OUT 6. The fluid inlet port 4 is connected via a passage 8 and internal port 10 to a cylindrical recess 12 in the valve body 2. Similarly, the fluid outlet port 6 is connected via a passage 14 and internal port 16 in the valve body 2 to the recess 12.

A fluid sealing ring 18 is held within a coaxial counterbore 19 in the bottom end face 20 of a first valve armature 22 and is arranged to peripherally seal the port 16 in the closed condition of the valve. The first armature 22 is stacked coaxially with a second armature 24 within a cylindrical sleeve 26. The bottom end 28 of the sleeve 26 has an outwardly extending peripheral flange 30 which is sealed to the valve body 2 by a suitable fluid sealing means, O-ring 32. The flange 30 is retained against the O-ring 32 by a valve cover 34 shown partially in Figure 1, and having a suitable firm connection with the valve body 2.

The first armature 22 has a coaxial bore 36 extending therethrough to provide a fluid channel through the first armature 22, and a plurality of exterior longitudinal grooves 37 provide fluid channels along the outside of the first armature 22 between the recess 12 and the bore 36. The fluid sealing ring 18 is also provided with a coaxial hole 38 aligned with the bore 36 in the first armature 22. The top end of the first armature 22 has a fluid metering orifice 40 extending between the bore 36 and the top end face 42 of the first armature. An outwardly projecting peripheral ridge 44 on the top face 42 surrounds the fluid metering orifice 40 to provide a fluid sealing surface or rim. A first coaxial coil spring 46 is located between the flange 30 and a peripheral ledge 48 on the first end face 20 of the first armature 22, to urge the first armature 22 and the first fluid sealing ring 18 against fluid sealing surface 50 defining the end of the internal port 16 and peripherally seal the port 16.

The second armature 24 located within the sleeve 26 has a coaxial bore 52 extending therethrough. An inwardly directed coaxial lip 54 defining the end of the bore 52 in the bottom end face 56 of the second armature 24 is arranged to confine a slideable resilient sealing plug 58 within the bore 52 of the second armature 24 and extending through the opening defined by the coaxial lip 54 toward the fluid metering orifice 40. A second spring 62 is confined within the second armature 24 and extends between the resilient plug 58 within the bore 52 in the second armature 24 and a magnetic material end plug 64 which is fixed in the upper end of the sleeve 26 to seal that end and to provide a magnetic flux path. A first copper shading ring 66 is provided in the bottom end face 56 of the second armature 24, and a second copper shading ring 68 is provided in the top end face 70 of the second armature 24.

A first solenoid coil assembly 72 in the form of an annulus surrounding a portion of the sleeve 26 is positioned adjacent to the cover 34. A second solenoid coil assembly 74 in the form of an annulus is spaced from the first coil assembly 72 by a pair of spaced apart magnetic material rings in the form of flat plates 76, 78 and is also arranged to surround a portion of the sleeve 26. The plates 76 and 78 function as magnetic flux path directing elements to minimize stray magnetic flux paths between the coil assemblies 72 and 74. The second armature 24 is also provided with a peripheral groove 79 located approximately between the flux plates 76, 78 to further minimize the amount of stray magnetic flux flowing between the second coil 74 and the first armature 22 no as to minimize any undesired effect therebetween, e.g., the magnetic flux from the second coil 74 attracting the first armature 22. The first and second coil assemblies 72, 74 are shown in simplified form in Figure 1 and may each include an eletromagnetic winding and a magnetic field structure. The coils 72 and 74 have electrical connections to respective terminals 76 and 78 and, via connections 80 and 82, to a common terminal 84 as shown.

The valve is shown in Figure 1 in a closed state wherein the sealing ring 18 is positioned against the fluid sealing surface 50 of the orifice 16 by the spring 46 acting through the ledge 48 to seal the fluid path through the valve body 2 between the fluid inlet ports 4 and the fluid outlet port 6. In this position, the first armature 22 is located at the bottom of a sleeve 26 while the second armature 24 is located against the adjacent end of the first armature 22 by the action of the spring 62 acting on the sealing plug 58. Thus, the sealing plug 58 is urged against the ridge 44 on the orifice 40 to seal the fluid path through the bore 36 in the first armature 22.

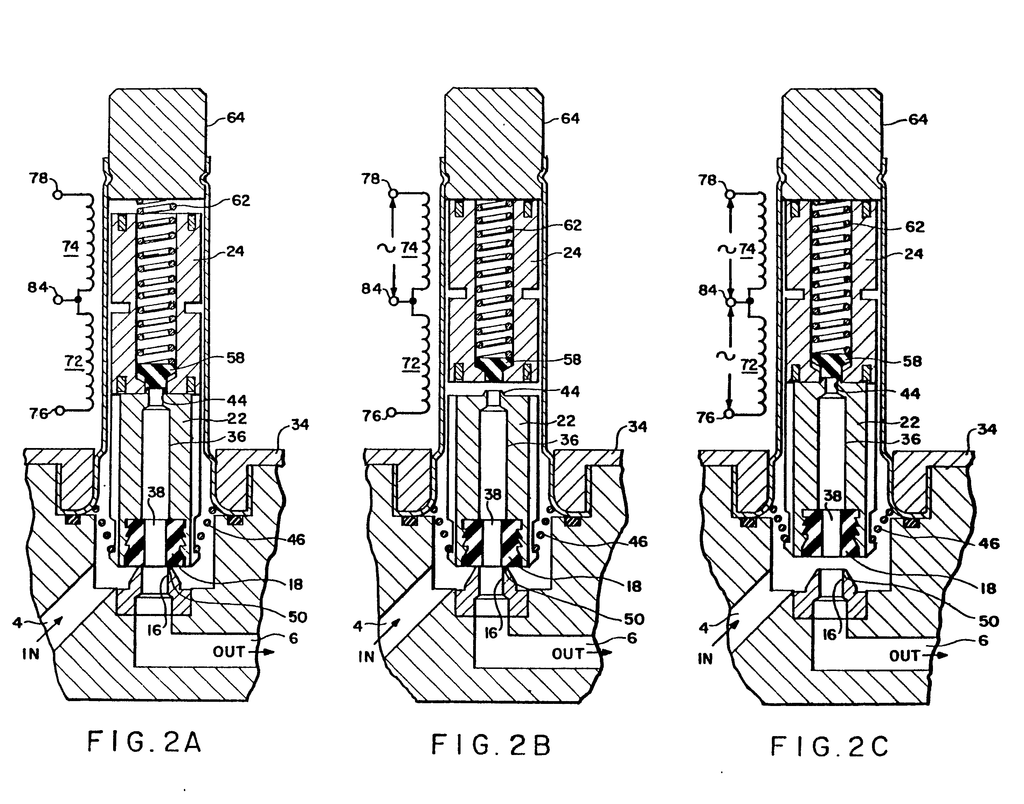

Figures 2A, 2B and 2C are simplified sections of the valve to illustrate progressive stages in the operation of the valve to provide a first and second flow rate. Figure 2A shows the valve in the same closed condition illustrated in Figure 1. In this state neither of the solenoid coils 72 and 74 is energized. Figure 2B shows a partially opened or first state of the valve to provide a low or first flow rate through the valve body between the inlet port 4 and the outlet port 6. This partially opened state of the valve is achieved by energizing the second solenoid coil 74 from a respective power source, not shown, to effect a positioning of the second armature 24 to the position shown in Figure 2B. Specifically, the second armature 24 is elevated to a position where the bottom end face 57 bears against the end plug 64 while compressing the spring 62. In this position of the second armature 24, the plug 58 is separated from the ridge 44 surrounding the orifice 40. Thus, the fluid is now able to flow from the inlet port 4 into the recess 12 and along the grooves 37 on the external surface of the first armature 22 to reach the orifice 40. The fluid then flows through the bore 36 in the first armature 22 and the hole 38 in the sealing ring 18 to the orifice 16 and fluid passage 14 to ultimately reach the outlet port 6. This flow is controlled or restricted by the size of the orifice 40 to a predetermined rate which is lower than the maximum flow rate capable of being handled by the valve.

To effect this greater or maximum flow rate through the valve as shown in Figure 2C, the first and second solenoid coils 72 and 74 are both energized from a suitable source, not shown. In this operating state of the valve, the second armature is retained in the position shown in Figure 2B and the second armature 24 is now elevated to a position where the top end face 42 is in contact with the bottom end face 56 of the second armature 24 while the ridge 44 is again in contact with the plug 58 while compressing the spring 46. In this position of the second armature 22, the sealing ring 18 is separated from the fluid sealing surface 50 of the orifice 16 by a maximum distance to achieve a maximum flow rate through the valve.

## Claims

1. A solenoid valve comprising a valve body (2) having a fluid path (4, 8, 10, 12, 16, 14, 6) therethrough and lower (22) and upper (24) coaxial armatures which are elevated respectiveley by a first (72) and a second (74) solenoid coil, the lower armature having a sealing member (18) sealing against a rim (50) of the outlet passage when the armature is not elevated,

whereby energizing of the second coil produces a low flow rate and energizing of both coils produces a high flow rate,

characterized in that the lower armature (22) has an internal bore (36, 38, 40) communicating between its two end faces and has a plurality of exterior longitudinal grooves (37) communicating with the inlet port (4), the grooves and the bore allowing a fluid path at the low flow rate,

and the upper armature (24) has a respective sealing member (58) which seals against a rim (ridge 44) forming the upper end of the bore of the lower armature, when both armatures are in the same position (both elevated or both lowered).

2. A valve according to Claim 1 characterized in that each armature (22, 24) has a respective spring means (46, 62) associated with it to urge its sealing means against the associated rim.

3. A valve according to Claim 2 characterized in that each spring means comprises a spring coaxial with the armatures.

4. A valve according to any previous claim characterized in that the sealing member (58) of the upper armature is slidably captured within the upper armature.

## Patentansprüche

1. Elektromagnetisches Ventil mit einem Ventilkörper (2), der einen hindurchgehenden Fluidpfad (4, 8, 10, 12, 16, 14, 6) und untere (22) und obere (24) koaxiale Läufer aufweist, die durch eine erste (72) bzw. eine zweite (74) elektromagnetische Spule angehoben werden, wobei der untere Läufer ein Dichtelement (18) aufweist, das gegen einen Rand (50) des Auslaß-Durchgangs abdichtet, wenn der Läufer nicht gehoben ist, wobei das Einschalten der zweiten Spule eine geringe Flußrate erzeugt und das Einschalten beider Spulen eine hohe Flußrate erzeugt,

dadurch gekennzeichnet, daß
der untere Läufer (22) eine interne Bohrung (36, 38, 40) aufweist, die zwischen seinen zwei Endflächen verbindet, und eine Vielzahl von äußeren längsgestreckten Rinnen (37) hat, die mit dem Einlaßanschluß (4) verbinden, wobei die Rinnen und die Bohrung einen Fluidpfad bei der geringen Flußrate ermöglichen, und der obere Läufer (24) ein jeweiliges Abdichtelement (58) hat, das gegen einen Rand (Steg 44) abdichtet, welcher das obere Ende der Bohrung des unteren Läufers bildet, wenn sich beide Läufer in derselben Position befinden (beide angehoben oder beide abgesenkt).

2. Ventil nach Anspruch 1, dadurch gekennzeichnet, daß jeder Läufer (22, 24) jeweils eine mit ihm verbundene Federeinrichtung (46, 62) hat, um seine Dichtungseinrichtung gegen den zugeordneten Rand zu zwingen.

3. Ventil nach Anspruch 2, dadurch gekennzeichnet daß jede Federeinrichtung eine mit den Läufern koaxiale Feder aufweist.

4. Ventil nach einem der vorhergehenden Ansprüche, dadurch gekennzeichnet, daß das Dichtelement (58) des oberen Läufers gleitfähig in dem oberen Läufer gelagert ist.

## Revendications

1. Un clapet électromagnétique comprenant un corps (2) de clapet présentant un trajet de fluide (4, 8, 10, 12, 16, 14, 6) qui le traverse et des induits coaxiaux inférieur (22) et supérieur (24) qui sont élevés respectivement par un premier (72) et un second (74) solénoïdes, l'induit inférieur possédant un elément d'étanchéité (18) formant joint d'étanchéité contre un rebord (50) du passage de sortie quand l'induit n'est pas élevé, l'excitation du second solénoïde produisant un débit faible, et l'excitation des deux solénoïdes produisant un débit élevé, caractérisé en ce que l'induit inférieur (22) comporte un alésage intérieur (36, 38, 40) communiquant entre ses deux faces extrêmes et présente une pluralité de rainures longitudinales extérieures (37) communiquant avec l'orifice (4) d'entrée, les rainures et l'alésage permettant un trajet de fluide au débit faible, et l'induit supérieur (24) comportant un élément respectif d'étancheité (58) qui forme joint d'étanchéité contre un rebord (arête 44) constituant l'extrémité supérieure de l'alésage de l'induit inférieur, quand les deux induits sont dans la même position (tous deux élevés ou tous deux abaissés).

2. Un clapet électromagnétique selon la revendication 1, caractérisé en ce que chaque induit (22, 24) possède dos moyens respectifs de ressort (46, 62) qui lui sont associés pour pousser ses moyens formant joint d'étanchéité contre le rebord associé.

3. Un clapet électromagnétique selon la revendication 2, caractérisé en ce que chaque moyen de ressort comprend un ressort coaxial avec les induits.

4. Un clapet électromagnétique selon l'une quelconque des précédentes revendications, caractérisé en ce que l'élément (58) formant joint d'étanchéité de l'induit supérieur est maintenu coulissant à l'intérieur de l'armature supérieure.

F I G. I

FIG. 2A        FIG. 2B        FIG. 2C

EP 0 190 882 B1